# EUROPÄISCHE PATENTSCHRIFT

(11) **EP 1 799 525 B1**
(45) Veröffentlichungstag und Bekanntmachung des Hinweises auf die Patenterteilung: **15.10.2008**
(21) Anmeldenummer: 05778248.4
(22) Anmeldetag: 12.08.2005
(51) Int. Cl.: B62B 1/10

(54) **TRÄGERGESTELL FÜR EINEN VON HAND ZU BEWEGENDEN WAGEN, INSBESONDERE GOLFWAGEN**
CARRIER FRAME FOR A MANUALLY MOVABLE CADDIE, IN PARTICULAR A GOLF CADDIE
CHASSIS POUR CHARIOT DEPLAÇABLE MANUELLEMENT, EN PARTICULIER CHARIOT DE GOLF

(30) Priorität: 23.08.2004 DE 102004040855
(43) Veröffentlichungstag der Anmeldung: 27.06.2007
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Reinold
(86) Internationale Anmeldenummer: PCT/EP2005/008785
(87) Internationale Veröffentlichungsnummer: WO 2006/021331

(56) Entgegenhaltungen:
- FR-A- 2 575 430
- US-A- 2 470 272
- US-A- 2 598 046
- US-A- 2 648 545
- US-A- 5 351 983
- US-A- 5 673 928
- US-A1- 2002 185 844

## Beschreibung

Die Erfindung betrifft ein Trägergestell für einen von Hand zu bewegenden Wagen, insbesondere Golfwagen, der an seitlich vorstehenden Teilen des Trägergestells angebrachte Räder aufweist, wobei die seitlich vorstehenden Trägergestellteile unter Annäherung der Räder an eine Mittelebene oder Entfernung von der Mittelebene in entgegengesetzten Richtungen verschwenk- oder/und verschiebbar sind.

Aus der FR-A-2575430 ist ein zweirädriger Golfkarren mit den oben genannten Merkmalen bekannt, dessen Trägergestell seitlich vorstehende, an einen Mittelteil des Trägergestells angelenkte Achsstäbe aufweist, an deren Enden jeweils ein Rad angebracht ist. Zum Zusammenlegen des Goltwagens sind sowohl die Achsstäbe als auch die Räder um 90° verschwenkbar. Bei einem aus der US 2,648,548 bekannten Gotfwagen der eingangs erwähnten Art sind die seitlich vorstehenden Teile durch jeweils zwei im Dreieck angeordnete Lenkerstäbe gebildet, die an einen durchgehenden Mittelstab des Trägergestells angelenkt sind. Bei beiden Golfkarren liegen im zusammengelegten Zustand die verschwenkbaren Räder mit ihren Innenseiten einander gegenüber.

Der Erfindung liegt die Aufgabe zugrunde, ein neues Trägergestell für einen Golfwagen der oben genannten Art zu schaffen, durch das Handhabung und Nutzungsmöglichkeiten des Wagens verbessert sind.

Der diese Aufgabe lösende Golfwagen nach der Erfindung ist dadurch gekennzeichnet, dass die einander angenäherten Räder mit ihren Außenseiten einander gegenüberliegen.

Vorteilhaft lässt sich ein solcher Golfwagen zwecks Transport besonders platzsparend zu einem im Umriss flachen Körper zusammenlegen, der wenig Stauvolumen benötigt und sich z.B. in einem PKW-Kofferraum neben weiterem Gepäck unterbringen lässt.

Vorteilhaft können die Räder zusätzlich zu den Trägerteilen um eine zur Radachse im Winkel stehende Achse verschwenkbar sein, so dass die einander angenäherten Räder axial zueinander ausgerichtet sind. In diesem Fall kann der Golfwagen auch im zusammengelegten Zustand noch fahrbar sein.

Das Trägergestell ist vorteilhaft in Draufsicht rahmenartig mit Freiraum für nach unten ausbauchendes Golfgepäck vorgesehen. So lässt sich vorteilhaft die Gesamthöhe des beladenen Golfwagens verringern und damit die Schwerpunktlage verbessern. Es versteht sich, dass ein solches Trägergestell auch von Vorteil ist, wenn sich der Golfwagen nicht erfindungsgemäß zusammenlegen lässt.

In weiterer Ausgestaltung der Erfindung sind die seitlich vorstehenden Trägergestellteile bügelartig mit zwei an das übrige Trägergestell, z.B. eine Mittelstange, angelenkten Bügelschenkeln ausgebildet. Vorzugsweise verlaufen die Bügelschenkel von den Anlenkungen zu den Rädern hin schräg nach unten, was den Freiraum für Golfgepäck zwischen den Rädern erweitert.

In einer besonders bevorzugten Ausführungsform der Erfindung sind die Bügelschenkel an die beiden Enden von Halter für Golfgepäck tragenden Querträgern angelenkt. Während es denkbar ist, diese Querträger mit der genannten Mittelstange zu verbinden, besteht das Trägergestell vorzugsweise ausschließlich aus den Querträgern und Bügeln und bildet so vorteilhaft das obengenannte rahmenartige Trägergestell.

In weiterer Ausgestaltung der Erfindung können die Bügelschenkel gegeneinander um ein nahe bei den Radachsen angeordnetes Gelenk verschwenkbar sein. Hierdurch ergibt sich die Möglichkeit, über den beschriebenen Zustand hinaus den Wagen noch weiter zusammenzulegen, indem die Bügelschenkel aufeinander zu geschwenkt werden.

Die zum Verschwenken der Trägergestellteile und Räder erforderlichen Gelenke können sowohl in der Betriebsstellung der Trägergestellteile und Räder als auch in der verschwenkten Stellung, in welcher der Golfwagen zusammengelegt ist, arretierbar sein. So lässt sich der Golfwagen im zusammengelegten Zustand sicher handhaben und ggf. auch fahren.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: einen Golfwagen nach der Erfindung in einer Draufsicht,
- Fig. 2: den Golfwagen von Fig. 1 in einer Seitenansicht,
- Fig. 3: den Golfwagen von Fig. 1 in einer Draufsicht im zusammengelegten Zustand,
- Fig. 4: den gemäß Fig. 3 zusammengelegten Golfwagen in Seitenansicht mit eingeschwenkter Zug-/Schubstange,
- Fig. 5: den Golfwagen von Fig. 1 zusammengelegt in einer von Fig. 3 und 4 abweichenden Art und Weise,
- Fig. 6: den Golfwagen von Fig. 1 in gegenüber Fig. 5 noch weiter zusammengelegtem Zustand,
- Fig. 7: ein weiteres Ausführungsbeispiel (Fig. 7a und 7b) für einen Golfwagen nach der Erfindung in schematischer Darstellung, und
- Fig. 8: den gemäß Fig. 3 zusammengelegten Golfwagen in Seitenansicht mit umgeschwenkter Zug-/Schubstange und eingeschwenkten Bügelschenkeln.

Ein Golfwagen weist ein Trägergestell aus, an welchem einander gegenüberliegende Räder 2 sowie eine Zug-/Schubstange 3 mit einem Handgriff 4 angebracht sind.

Das Trägergestell 1 besteht aus einem in Schubrichtung vorderen Querträger 5 und einem hinteren Querträger 6 sowie an die Querträger angelenkten Bügeln 7 und 8, an welchen die Räder 2 angebracht sind.

Vier, die Querträger 5,6 und Bügel 7,8 miteinander verbindende Gelenke 9 mit einer Gelenkachse 10 sind im normalen Betriebszustand des Golfwagens arretiert, so dass Bügel und Querträger einen stabilen Rahmen bilden.

Die Räder 2 sind mit dem Bügel 7 bzw. 8 jeweils über ein arretierbares, um eine Achse 12 drehbares Gelenk 11 verbunden. In dem betreffenden Ausführungsbeispiel verlaufen die Gelenkachsen 10 der Gelenke 9 parallel zu den Gelenkachsen 12 der Gelenke 11.

Die Bügel 7 und 8 weisen jeweils zwei Bügelschenkel 21 und 22 auf, wobei in den beiden in Schubrichtung vorderen Bügelschenkeln 21 jeweils nahe dem Gelenk 11 ein Scharniergelenk 23 vorgesehen ist, dessen Drehachse 24 in der durch die Bügelschenkel 21,22 aufgespannten Ebene liegt.

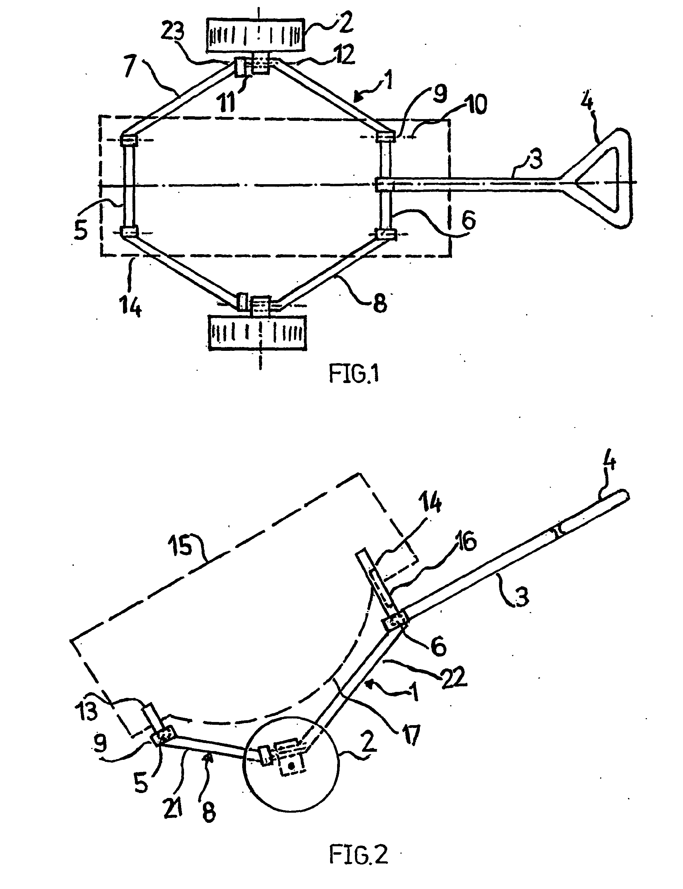

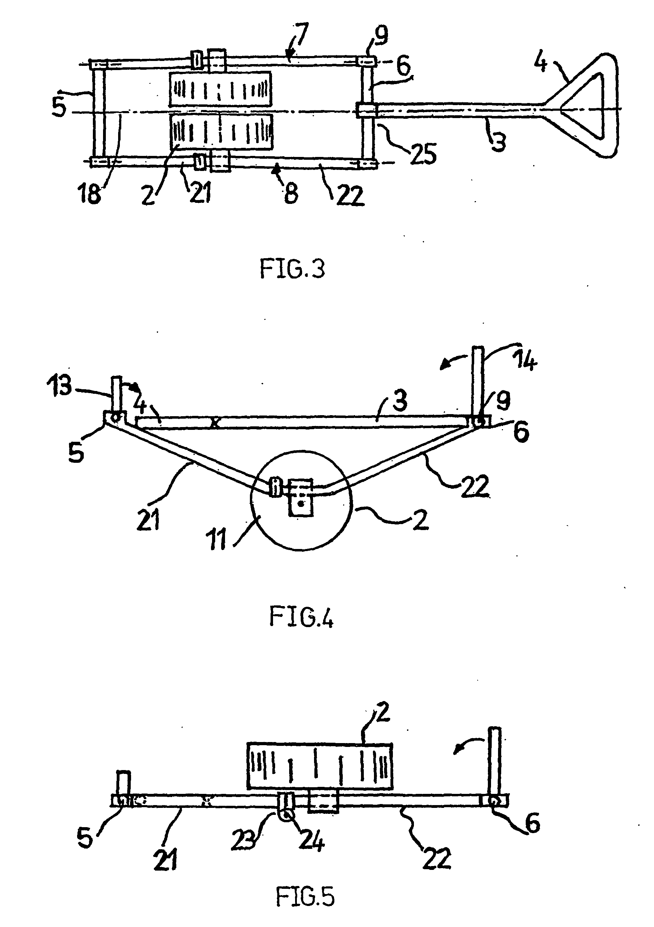

An den Querträgern 5 und 6 ist jeweils ein (in Fig. 1 und 3 nicht dargestellter) Halter 13 bzw. 14 für Golfgepäck 15 vorgesehen. Halter und Golfgepäck können für einander bestimmte Verbindungsmittel aufweisen. Die Halter 13,14 sind um wenigstens 90° umklappbar.

Die Zug-/Schubstange 3 ist mit dem Querträger 6 über ein arretierbares Gelenk 25 verbunden.

Der beschriebene Golfwagen verfügt über einen (nicht gezeigten) Hilfsantrieb mit in den Rädern untergebrachten Antriebsmotoren, wobei der Hilfsantrieb durch einen Kraftsensor im Handgriff 4 sowie eine Steuereinrichtung so geregelt wird, dass der Benutzer unabhängig von den jeweiligen Lastbedingungen nur eine als bequem empfundene Zug- bzw. Schubkraft aufbringen muß. Im Halter 14 ist ein Fach 16 für eine Batterie als Energiequelle des Hilfsantriebs vorgesehen, wobei die den Hilfsantrieb regelnde Steuerschaltung in das Batteriegehäuse integriert ist.

Wie Fig. 2 erkennen lässt, verlaufen die Schenkel 21 und 22 der Bügel 7 und 8 von den Gelenken 9 jeweils schräg nach unten zu den Rädern. Der offene Rahmen bietet zwischen den Rädern Freiraum für einen nach unten ausbauchenden Teil 17 des Golfgepäcks 15.

Zwecks Transport lässt sich der Golfwagen, wie in Fig. 3 dargestellt ist, zusammenlegen, wozu die Gelenke 9 und 11 gelöst und die Bügel 7 und 8 in entgegengesetzten Drehrichtungen zu einer Mittelebene 18 hin verschwenkt werden. Vorher wurden die Räder 2 so weit um die Achsen 12 gedreht, dass sie in der in Fig. 3 gezeigten Stellung der Bügel 7 und 8 axial zueinander ausgerichtet sind und ihre Außenseiten einander gegenüberliegen.

In der in Fig. 3 gezeigten Position lassen sich die Gelenke 9 und 11 wieder arretieren, so dass der Golfwagen auch im zusammengelegten Zustand stabil ist, auf den Rädern 2 rollen und mit Unterstützung durch den Hilfsantrieb gezogen oder geschoben werden kann, wobei das Golfgepäck ggf. auf dem zusammengelegten Wagen verbleibt.

In der in Fig. 3 gezeigten Stellung ist der Wagen in den Konturen flach und benötigt wenig Stauvolumen. Beispielsweise kann er in einem engen, oberhalb von Reisegepäck in einem PKW-Kofferraum verbliebenen Stauraum untergebracht werden.

Gemäß Fig. 4 lässt sich die Zug-/Schubstange 3 um das Gelenk 25 umklappen, so dass sich die Länge des zusammengelegten Golfwagens noch wesentlich weiter verringert.

Alternativ zu der vorangehend beschriebenen Art und Weise lässt sich der Golfwagen auch durch Verschwenken der Bügel 7,8 nach außen, so dass die Bügelschenkel 21,22 in einer Ebene mit den Querträgern 5,6 liegen, und durch Verschwenken der Räder 2 um 90° in den in Fig. 5 gezeigten Zustand überführen, in welchem die Radachsen zueinander parallel verlaufen.

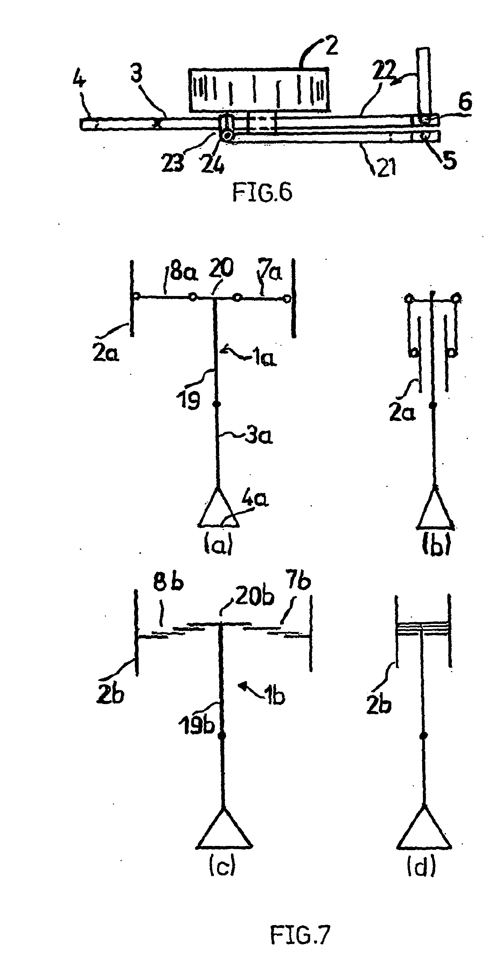

Durch die Verschwenkung der Bügel liegen auch die Drehachsen 24 der Scharniergelenke 23 in der genannten Ebene. Folglich lassen sich gemäß Fig. 6 die beiden Bügelschenkel 21 mit dem Querträger 5 um 180° verschwenken.

Die in Fig. 6 sichtbare Zug-/Schubstange 3 mit dem Handgriff 4 könnte teleskopartig ausgebildet oder mit einem zusätzlichen Gelenk versehen sein, so dass sich auch die Zug-/Schubstange innerhalb der Konturen des zusammengelegten Golfwagens unterbringen lässt.

Zur gleichzeitigen Arretierung zweier Gelenke 9 kommt ein längs durch den Querträger 5 bzw. 6 geführter Spannbolzen in Betracht.

Die Gelenke können im übrigen arretierende Sitze aufweisen, in die sie im Betriebszustand des Wagens durch dessen Eigengewicht oder/und die mitgeführte Last gedrückt werden.

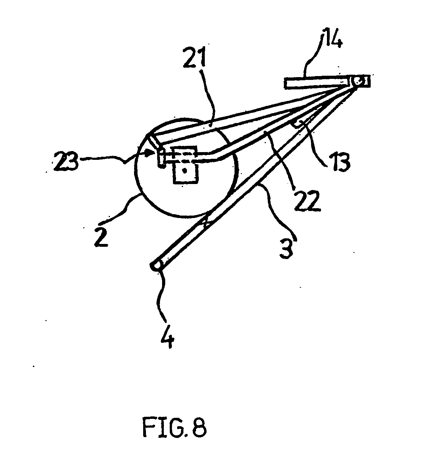

Alternativ oder zusätzlich könnten die Gelenke 23 so ausgebildet werden, dass sich die beiden Bügelschenkel 21 aus der in Fig. 3 gezeigten Position um eine zu den Radachsen parallele Achse in Richtung zu den Bügelschenkeln 22 verschwenken lassen. Gegebenenfalls erfolgt die Verschwenkung um die Radachse selbst. Hierbei kann der Golfwagen in den in Fig. 8 gezeigten Zustand gebracht werden.

Es wäre ferner möglich, die Gelenke 23 so auszubilden, dass die Bügelschenkel 21 auch in der Betriebsstellung des Golfwagens in Richtung zu den Bügelschenkeln 22 umgeklappt werden können.

Es besteht also die Möglichkeit, den Golfwagen je nach Platzverhältnissen in unterschiedlicher Weise zusammenzulegen, wobei die Alternative von Fig. 5 und 6 zu einer insgesamt flacheren Kontur aber dafür größeren Breite des zusammengelegten Golfwagens führt. Nachteilig gegenüber dem Zustand von Fig. 3 lässt sich der Golfwagen im zusammengelegten Zustand gemäß Fig. 5 nicht mehr fahren.

In einer in Fig. 7a und b gezeigten alternativen Ausführungsform weist ein Trägergestell 1a eine Mittelstange 19 und einen Querträger 20 mit verschwenkbaren Endteilen 7a und 8a auf, wobei an den Endteilen ihrerseits verschwenkbare Räder 2a angebracht sind. Wie Fig. 4b zeigt, lassen sich die Endteile in Richtung zur Mittelstange 19 hin und die Räder 2a so verschwenken, dass ihre Außenseiten einander gegenüberliegen. Die Räder könnten, wie übrigens auch bei dem Ausführungsbeispiel von Fig. 1 bis 3, in entgegengesetzter Richtung verschwenkbar und dafür die Endteile 7a und 8a weiter auf die Mittelstange 19 heran umschwenkbar sein.

Ein in Fig. 7c und d gezeigtes weiteres Ausführungsbeispiel weist ein Trägergestell 1b mit einer Mittelstange 19b und einem Querträger 20b auf, wobei Arme 7b und 8b des Querträgers 20b unter Verringerung des Abstandes der einander gegenüberliegenden Räder 2b teleskopartig zusammenschiebbar sind.

## Patentansprüche

1. Trägergestell für einen von Hand zu bewegenden Wagen, insbesondere Golfwagen, der an seitlich vorstehenden Teilen (7,8) des Trägergestells (1) angebrachte Räder (2) aufweist, wobei die seitlich vorstehenden Trägergestellteile (7,8) unter Annäherung der Räder (2) an eine Mittelebene (18) oder Entfernung von der Mittelebene (18) in entgegengesetzten Richtungen verschwenkoder/und verschiebbar sind,
**dadurch gekennzeichnet,**
**dass** die einander angenäherten Räder (2) mit ihren Außenseiten einander gegenüberliegen.

2. Trägergestell nach Anspruch 1,
**dadurch gekennzeichnet,**
**dass** zusätzlich zu den Trägergestellteilen (7,8) die Räder (2) um eine zur Radachse im Winkel stehende Achse (12) verschwenkbar sind.

3. Trägergestell nach Anspruch 2,
**dadurch gekennzeichnet,**
**dass** die Trägergestellteile (7,8) und Räder (2) in solcher Weise verschwenk-oder verschiebbar sind, dass die Radachsen der einander angenäherten Räder (2) zusammenfallen.

4. Trägergestell nach einem der Ansprüche 1 bis 3,
**dadurch gekennzeichnet,**
**dass** das Trägergestell (1) in Draufsicht rahmenartig mit Freiraum für nach unten ausbauchendes Gepäck, insbesondere Golfgepöck (15,17), ausgebildet ist.

5. Trägergestell nach einem der Ansprüche 1 bis 4,
**dadurch gekennzeichnet,**
**dass** die seitlich vorstehenden Trägergestellteile (7,8) bügelartig mit zwei an das übrige Trägergestell (1) angelenkten Bügelschenkeln (21,22) ausgebildet sind.

6. Trägergestell nach Anspruch 5,
**dadurch** gekenntzeichnet,
dass die Bügelschenkel (21,22) von der Anlenkung (5) zu den Rädern (2) hin schräg nach unten verlaufen.

7. Trägergestell nach Anspruch 5 oder 6,
**dadurch gekennzeichnet,**
**dass** die Bügelschenkel (21,22) an die Enden von Halter (13,14) für Golfgepäck (15,17) tragenden Querträgern (5,6) angelenkt sind.

8. Trägergestell nach Anspruch 7,
**dadurch gekennzeichnet,**
**dass** das Trägergestell (1) ausschließlich durch die Querträger (5,6) und Bügel (7,8) gebildet ist.

9. Trägergestell nach einem der Ansprüche 2 bis 8,
**dadurch gekennzeichnet,**
**dass** zum Verschwenken der Trägergestellteile (7,8) und Räder (2) erforderliche Gelenke (5,11) sowohl in der Betriebsstellung der Trägergestellteile (7,8) und Räder (2) als auch in deren verschwenkter Stellung arretierbar sind.

10. Trägergestell nach einem der Ansprüche 5 bis 9,
**dadurch gekennzeichnet,**
**dass** die Bügelschenkel (21,22) gegeneinander um ein Gelenk (23) verschwenkbar sind.

## Claims

1. Carrier frame for a manually movable trolley, in particular golf trolley, which has wheels (2) fitted to laterally protruding parts (7, 8) of the carrier frame (1), wherein the laterally protruding carrier frame parts (7, 8) are pivotable and/or displaceable by the wheels (2) being brought towards a centre plane (18) or being moved away from the centre plane (18) in opposite directions, **characterized in that** the outer sides of the wheels (2) which are brought towards each other lie opposite each other.

2. Carrier frame according to Claim 1, **characterized in that**, in addition to the carrier frame parts (7, 8), the wheels (2) are pivotable about an axis (12) which is at an angle to the wheel axis.

3. Carrier frame according to Claim 2, **characterized in that** the carrier frame parts (7, 8) and wheels (2) are pivotable or displaceable in such a manner that the wheel axes of the wheels (2) brought towards each other coincide.

4. Carrier frame according to one of Claims 1 to 3, **characterized in that** the carrier frame (1), in top view, is designed in the manner of a frame with a free space for downwardly bulging luggage, in particular a golf bag (15, 17).

5. Carrier frame according to one of Claims 1 to 4, **characterized in that** the laterally protruding carrier frame parts (7, 8) are designed in a bow shape with two bow limbs (21, 22) pivotable coupled to the rest of the carrier frame (1).

6. Carrier frame according to Claim 5, **characterized in that** the bow limbs (21, 22) run obliquely downwards from the coupling point (5) towards the wheels (2).

7. Carrier frame according to Claim 5 or 6, **characterized in that** the bow limbs (21, 22) are coupled to the ends of crossmembers (5, 6) which support holders (13, 14) for the golf bag (15, 17).

8. Carrier frame according to Claim 7, **characterized in that** the carrier frame (1) is formed exclusively by the crossmembers (5, 6) and bows (7, 8).

9. Carrier frame according to one of Claims 2 to 8, **characterized in that** joints (5, 11) required for pivoting the carrier frame parts (7, 8) and wheels (2) are lockable both in the operating position of the carrier frame parts (7, 8) and wheels (2) and in the pivoted position thereof.

10. Carrier frame according to one of Claims 5 to 9, **characterized in that** the bow limbs (21, 22) are pivotable towards each other about a joint (23).

## Revendications

1. Châssis pour un chariot déplaçable à la main, en particulier chariot de golf, qui comprend des roues (2) montées sur des parties (7, 8) en dépassement latéral du châssis (1), dans lequel les parties du châssis (7, 8) en dépassement latéral sont capables de pivoter et/ou de se déplacer dans des directions opposées avec rapprochement des roues (2) vers un plan médian (18) ou éloignement de celles-ci depuis le plan médian (18),
**caractérisé en ce que** les roues (2) qui se rapprochent l'une de l'autre sont mutuellement opposés par leurs faces extérieures.

2. Châssis selon la revendication 1,
**caractérisé en ce que**, en supplément aux parties (7, 8) du châssis, les roues (2) sont capables de pivoter autour d'un axe (12) qui fait un angle par rapport à l'axe des roues.

3. Châssis selon la revendication 2,
**caractérisé en ce que** les parties (7, 8) du châssis et les roues (2) sont capables de pivoter ou de se déplacer d'une manière telle que les axes des roues (2) qui se rapprochent l'une de l'autre coïncident.

4. Châssis selon l'une des revendications 1 à 3,
**caractérisé en ce que** le châssis (1) est réalisé, en vue de dessus, à la manière d'un cadre avec un espace libre pour un bagage en suspension vers le bas, en particulier un sac de golf (15, 17).

5. Châssis selon l'une des revendications 1 à 4,
**caractérisé en ce que** les parties de châssis (7, 8) en dépassement latéral sont réalisées à la manière d'un étrier avec deux branches d'étrier (21, 22) articulées sur le reste du châssis (1).

6. Châssis selon la revendication 5,
**caractérisé en ce que** les branches d'étrier (21, 22) s'étendent en oblique vers le bas depuis l'articulation (5) vers les roues (2).

7. Châssis selon la revendication 5 ou 6,
**caractérisé en ce que** les branches d'étrier (21, 22) sont articulées aux extrémités de supports transversales (5,6) qui portent des supports (13,14) pour le sac de golf (15, 17).

8. Châssis selon la revendication 7,
**caractérisé en ce que** le châssis (1) est formé exclusivement par les supports transversales (5, 6) et par l'étrier (7, 8).

9. Châssis selon l'une des revendications 2 à 8,
**caractérisé en ce que** les articulations (5, 11) nécessaires pour le pivotement des parties de châssis (7, 8) et des roues (2) sont susceptibles être arrêtées aussi bien dans la position de fonctionnement des parties de châssis (7, 8) et des roues (2), que dans leur position pivotée.

10. Châssis selon l'une des revendications 5 à 9,
**caractérisé en ce que** les branches d'étrier (21, 22) sont capables de pivoter l'une par rapport à l'autre autour d'une articulation (23).
